Europäisches Patentamt

European Patent Office

Office européen des brevets

(19)

(11) Veröffentlichungsnummer: **0 070 414**
**B1**

(12) **EUROPÄISCHE PATENTSCHRIFT**

(45) Veröffentlichungstag der Patentschrift:
**29.10.86**

(51) Int. Cl.⁴: **G 05 B 15/02, H 05 B 1/02**

(21) Anmeldenummer: **82105610.8**

(22) Anmeldetag: **25.06.82**

(54) Elektronisches Steuergerät für Heizungsanlagen.

(30) Priorität: **11.07.81 DE 3127471**

(43) Veröffentlichungstag der Anmeldung:
**26.01.83 Patentblatt 83/4**

(45) Bekanntmachung des Hinweises auf die Patenterteilung:
**29.10.86 Patentblatt 86/44**

(84) Benannte Vertragsstaaten:
**DE FR GB IT**

(56) Entgegenhaltungen:
DE - A - 2 841 334
DE - A - 2 902 604
FR - A - 2 423 810
FR - A - 2 447 056
FR - A - 2 447 056
GB - A - 2 040 080
GB - A - 2 066 519

(73) Patentinhaber: **ROBERT BOSCH GMBH, Postfach 50,
D-7000 Stuttgart 1 (DE)**

(72) Erfinder: **Fauser, Edwin, Dipl.-Ing., J.-Kerner-Strasse 8,
D-7257 Ditzingen (DE)**
Erfinder: **Flaig, Rolf, Uhlandweg 6, D-7316 Köngen (DE)**
Erfinder: **Hahne, Jürgen, Ing. grad., Galgenberg 27,
D-7312 Kirchheim/Teck (DE)**
Erfinder: **Hilscher, Helmut, Dipl.-Ing.,
Fraubronnstrasse 22, D-7000 Stuttgart 70 (DE)**
Erfinder: **Kuhn, Martin, Ing. grad., Brinzinger Weg 13,
D-7300 Esslingen (DE)**
Erfinder: **Schirmer, Günter, Ing. grad., Kettenweg 13,
D-7121 Ingersheim (DE)**
Erfinder: **Stegmaier, Friedrich, Ing. grad.,
Goethestrasse 10, D-7031 Magstadt (DE)**
Erfinder: **Witzki, Erwin, Ing. grad., Römerstrasse 5,
D-7441 Neckartenzlingen (DE)**
Erfinder: **Fabian, Wolfgang, Weissenseeweg 11,
D-6800 Mannheim 81 (DE)**
Erfinder: **Spiegel, Bernt, Prof. Dr. Ing., Schwabenheimer
Strasse 8, D-6803 Edingen-Neckarhausen 1 (DE)**

ACTORUM AG

## Beschreibung

### Stand der Technik

Die Erfindung geht aus von einem elektronischen Steuergerät nach der Gattung des Hauptanspruchs. Bei einem bekannten Steuergerät dieser Gattung (DE-A1 2 902 604) sind für das Programmieren nur einige fest vorgegebene, durch Potentiometer verstellbare Temperaturwerte abrufbar, so dass Heizungsprogramme mit unterschiedlichen Individualwerten der Temperatur nicht vorgewählt werden können. Wird ein solcher Temperaturwert gewünscht, muss der Bedienende zur entsprechenden Zeit am Steuergerät einen Eingriff durch Verstellen der Potentiometer vornehmen. Eine andere Möglichkeit der Korrektur eines vorgewählten Heizungsprogrammes besteht darin, dass zur gegebenen Zeit eine der gewünschten Temperatur entsprechende Temperaturtaste gedrückt wird. Die dadurch hervorgerufene Veränderung des ablaufenden Programms bleibt so lange bestehen, bis durch Betätigen der gleichen Temperaturtaste wieder auf das gespeicherte Programm oder mit einer anderen Temperatur- bzw. Speicherwahltaste auf einen anderen Betriebszustand umgeschaltet wird. Diese Eingriffe in das vorgewählte Heizprogramm bzw. die vorgewählte Programmfolge sind jedoch am Steuergerät nicht erkennbar, so dass trotz Vorhandenseins einer Klappe, die in ihrer Grundstellung die Aufruftasten und die Zeittasten abdeckt, Fehlbedienungen nicht ausgeschlossen sind.

### Vorteile der Erfindung

Die erfindungsgemässe Anordnung mit den kennzeichnenden Merkmalen des Hauptanspruchs hat demgegenüber den Vorteil, dass für jedes vorwählbare Heizprogramm eine individuelle Temperatur eingeschrieben werden kann und dass durch Bedienen der Abruftasten sowohl die Zeiten als auch die Temperaturen am Display ablesbar sind. Durch das Überführen der Klappe in die Programmierstellung erlischt zwangsläufig die vom externen Wärmefühler gesteuerte Temperaturanzeige am Display, so dass die Tageszeitanzeige allein erhalten bleibt. Das ist für den Bedienenden ein sinnfälliger Hinweis darauf, dass er nun die Tagesanzeige korrigieren bzw. auf den aktuellen Wert bringen kann. Wenn danach die Klappe wieder in die Grundstellung überführt wird, erscheint erneut die vom Wärmefühler gesteuerte Temperaturanzeige neben der Tageszeit am Display. Wenn jedoch nach Überführen der Klappe in die Programmierstellung und Verschwinden der Temperaturanzeige für die externe Temperatur eine Aufruftaste gedrückt wird, erscheint am Display sowohl die Zeit als auch die Temperatur, die in das aufgerufene Tagesprogramm bzw. den aufgerufenen Tagesprogrammabschnitt bei einem vorangegangenen Programmiervorgang eingeschrieben worden ist. Besonders vorteilhaft ist es, wenn in die Tagesprogramme bereits fabrikseitig ein Grundprogramm eingeschrieben ist, so dass auch beim erstmaligen Aufrufen eines Tagesprogrammes bzw. -programmabschnittes eine Zeit- und eine Temperaturanzeige erfolgt und das Programmieren dann nur ein Korrigieren der bereits eingeschriebenen Werte von Zeit und Temperatur ist.

Durch die in den Unteransprüchen aufgeführten Massnahmen sind vorteilhafte Weiterbildungen des Gegenstandes des Hauptanspruchs möglich.

Bei Steuergeräten, bei welchen die Aufruftasten für die einzelnen Heizprogramme in einem Tagesprogrammfeld in Reihen angeordnet sind, welche die einzelnen Heizprogramme symbolisieren und bei welchen Einstellmittel für ein Wochenprogramm vorgesehen sind, ergibt sich eine übersichtliche und besonders sinnfällige, die Bedienung erleichternde Anordnung, wenn die Einstellmittel für das Wochenprogramm in einem neben dem Tagesprogrammfeld liegenden Wochenprogrammfeld in Reihen angeordnet bzw. in Bahnen verschiebbar sind, welche vorzugsweise im rechten Winkel zu den Reihen der Aufruftasten im Tagesprogrammfeld ausgerichtet sind und die einzelnen Wochentage symbolisieren. Die Reihen im Tagesfeldprogramm können darüber hinaus mit vorzugsweise unterschiedlich farbigen Linien versehen sein, welche sich im Wochenprogrammfeld fortsetzen.

Besonders vorteilhaft ist es, wenn die die Heizprogramme symbolisierenden Linien im Tagesfeldprogramm des Steuergeräts auf einer abnehmbaren Schriftfeldplatte angeordnet sind. Diese Platte kann nach Abnehmen vom Gerät auf eine Schreibunterlage aufgelegt und bequem mit den Daten der einzuspeichernden Heizprogramme beschriftet werden. Am Steuergerät selbst braucht dann nur noch das Einstellen der notierten Werte durch Bedienen der Tasten und sonstigen Programmeinstellgliedern vorgenommen werden.

Bei Ausbildung des Steuergeräts mit den Merkmalen nach Anspruch 6 kann ohne weitere Programmierarbeit ein fest vorgegebenes und eingespeichertes Tagesprogramm angewählt werden. In diesem Fall ist nach dem Öffnen der Klappe nur die richtige Tageszeit und gegebenenfalls der richtige Wochentag einzutasten und die Klappe wieder zu schliessen. Danach arbeitet das Gerät bereits nach dem fest vorgegebenen Programm. Auf einem der Bedienungsfelder des Steuergeräts kann ein Liniensymbol für das fest vorgegebene Programm mit dessen Daten aufgedruckt sein, welches gleichzeitig als Muster für die von Hand einzusetzenden Werte der vorwählbaren Heizprogramme dienen kann.

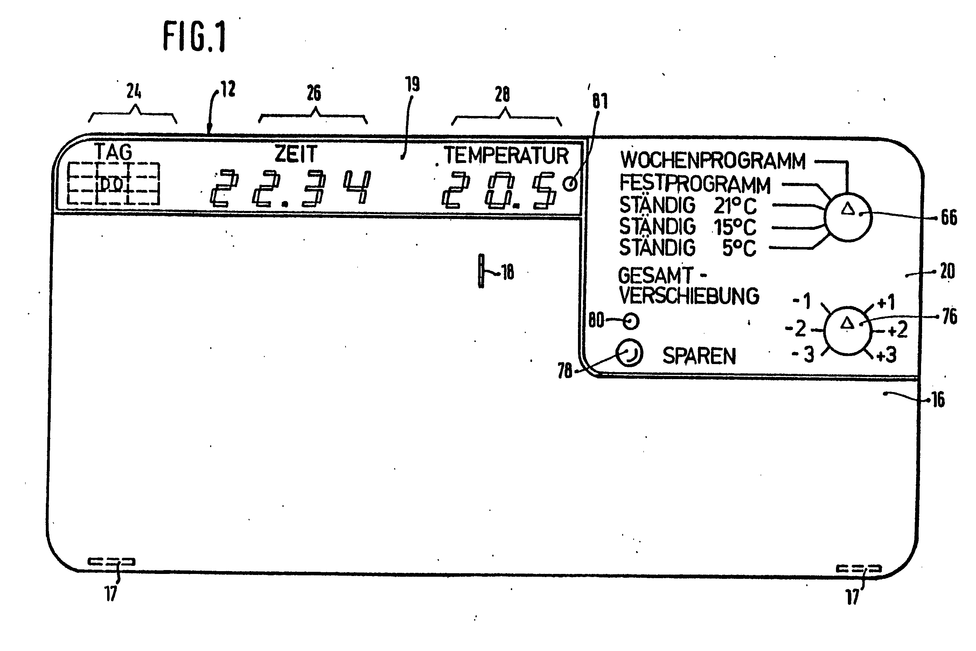

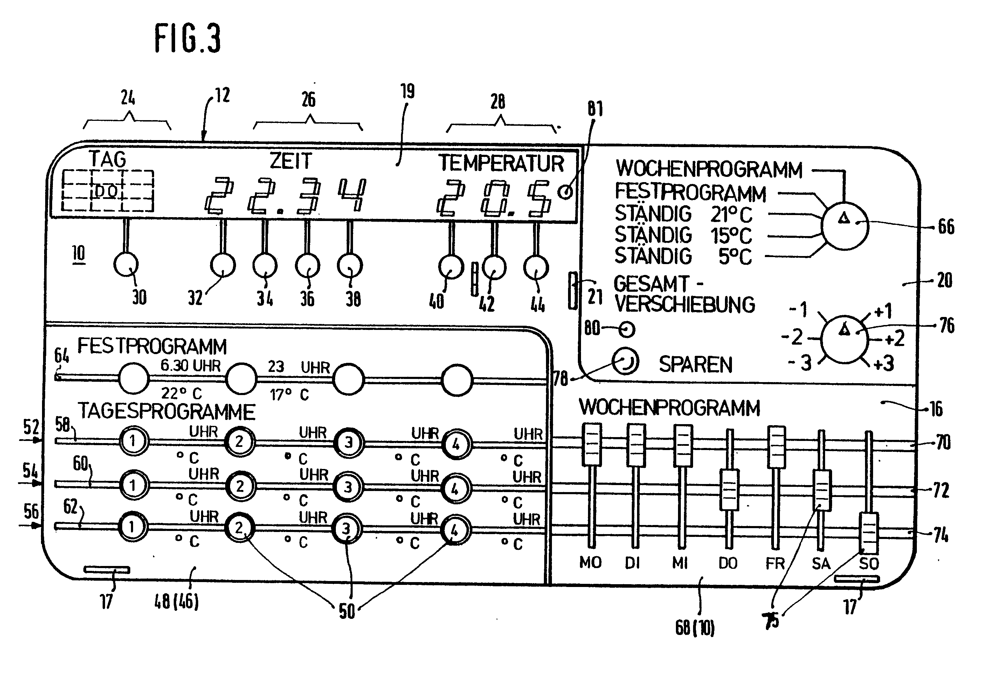

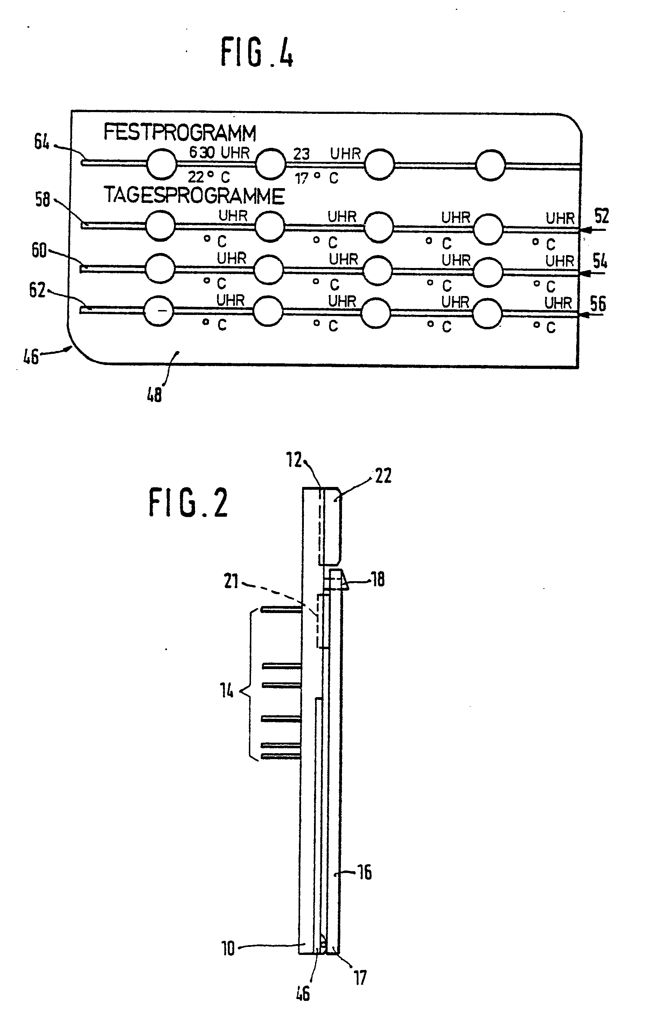

Ein Ausführungsbeispiel der Erfindung ist in der Zeichnung dargestellt und in der nachfolgenden Beschreibung näher erläutert. Es zeigen Fig. 1 die Vorderansicht des Steuergerätes bei geschlossener Klappe, Fig. 2 eine Seitenansicht des Gerätes nach Fig. 1, Fig. 3 die Vorderansicht des Gerätes nach Fig. 1 bei geöffneter bzw. abgenommener Klappe und Fig. 4 die abgenommene Schriftfeldplatte des Gerätes nach Fig. 1.

### Beschreibung des Ausführungsbeispieles

Das Steuergerät hat einen in der Zeichnung nicht dargestellten Montagesockel, welcher an einer Wand befestigbar ist und die weiterführenden Anschlüsse sowie eine eigene Stromversorgungseinheit und andere Teile trägt. Auf den Montagesockel ist eine Platine 10 (Fig. 2) aufsetzbar, welche die in integrierter Schaltungstechnik ausgeführten Bauelemente eines Rechners, einer Digitaluhr und eines Displays 12 enthält, und mit Kontaktsteckern 14 versehen ist, welche beim Aufsetzen der Platine 10 auf den Montagesockel mit darin enthaltenen Gegenkontakten selbsttätig in Eingriff kommen. An der Platine 10 ist eine Klappe 16 bei 17 schwenkbar gelagert, die durch den Federhaken 18 mechanisch an der Platine 10 verrastbar ist und in ihrer in Fig. 2 dargestellten Grundstellung die Vorderseite der Platine 10 bis auf einen oberen Randbereich 19 und ein Feld 20 abdeckt. Die Klappe 16 betätigt beim Öffnen einen Schalter 21, dessen Funktion nachstehend noch näher beschrieben ist. Der obere Randbereich 19 der Platine 10 ist mit einem Plexiglasstreifen 22 abgedeckt.

Das Display 12 enthält ein Feld 24 für eine Wochentaganzeige, eine Tageszeitanzeige 26 und eine Temperaturanzeige 28, welche von einem Thermostaten bzw. von einer Schaltung mit temperaturabhängigen Widerständen angesteuert ist. Unterhalb des Displays 12 sind über die Vorderseite der Platine 10 hervorstehende Tasten 30 bis 44 (Fig. 3) vorgesehen, welche nach Öffnen der Klappe 16 von aussen zugänglich sind. Die Taste 30 ist der Wochentaganzeige 24 zugeordnet während die Tasten 32 bis 38 der Zeitanzeige bzw. Zeitwahl und die Tasten 40 bis 44 der Temperaturanzeige 28 bzw. Temperaturwahl zugeordnet sind. Die Anordnung ist so getroffen, dass beim Drücken der Taste 30 jeweils die Buchstabenkombination des nächsten Wochentages erscheint.

Beim Drücken der Tasten 32 bis 38 springt die über der jeweils gedrückten Taste angeordnete Zahl der Anzeige 26 um eins weiter, sodass jede beliebige Tageszeitanzeige willkürlich einstellbar ist. Über die Tasten 40 bis 44 kann unter den nachstehenden noch näher beschriebenen Umständen eine Temperatur gewählt und der gewählte Wert vorübergehend zur Anzeige 28 gebracht werden.

Unterhalb der Tasten 30 bis 44 trägt die Platine 10 auf ihrer Vorderseite eine Schriftfeldplatte 46 (Fig. 4), welche abnehmbar ist und auf ihrer Vorderseite mit einem Tagesprogrammfeld 48 beschriftet ist. Im Bereich dieses Feldes 48 sind 12 durch die Schriftfeldplatte 46 hindurchragende Tasten 50 vorgesehen, welche zu je vieren in drei Gruppen 52, 54 und 56 zusammengefasst sind, in denen die Tasten im gleichmässigen Abstand in einer Linie liegen. Jede Gruppe 52 bis 56 ist einem vorwählbaren Tages-Heizprogramm zugeordnet, welches zudem durch eine Linie 58 bzw. 60 bzw. 62 symbolisiert ist.

Die Tasten 50 dienen als Aufruftasten für die drei vorwählbaren Tages-Heizprogramme, welche – entsprechend der Anzahl der Tasten 50 in einer Reihe – aus je 4 Schaltpunkten und mit den Parametern Zeit und Temperatur bestehen. Bevor die Tasten 50 gedrückt werden können, muss die Klappe 16 geöffnet werden. Dadurch wird über den Schalter 21 der Eingriff des Thermostaten auf das Display 12 unterbrochen und die Istwertanzeige 28 der Raumtemperatur zum Verschwinden gebracht. Vom Hersteller werden in die Tagesprogramme schon die Daten eines Grundprogramms eingeschrieben. Diese erscheinen beim Drücken der zugeordneten Taste 50 auf dem Display. Diese Daten können danach über die Tasten 32 bis 44 korrigiert bzw. neu eingeschrieben werden, wobei die neu eingeschriebenen Werte zur Kontrolle auf dem Display erscheinen. Die Anzeige bleibt solange erhalten, bis eine andere Taste 50 gedrückt wird und danach die Daten des der anderen Taste zugeordneten Schaltpunktes erscheinen, oder bis die Klappe 16 wieder in ihre Grundstellung zurückgeklappt wird, in welcher – ausgelöst durch den Schalter 21 – wieder die Tageszeit und der Istwert der Raumtemperatur erscheint.

Auf den die programmierbaren Tages- und Heizprogramme symbolisierenden Linien 58 bis 62 der Schriftfeldplatte 46 sind jeweils im Abstand rechts von einer Taste 50 über der Linie das Wort «Uhr» und unter der Linie die Bezeichnung «°C» aufgedruckt. Zwischen den Tasten 50 und den Aufdrucken ist Platz frei zum Aufschreiben der Daten, die für den jeweiligen Schaltpunkt 1 bis 4 das Programms eingespeichert werden sollen. Dieses Aufschreiben kann bequem nach Abnahme der Schriftfeldplatte 46 und Auflegen auf eine Schreibunterlage durchgeführt werden. Nach dem Aufstecken der Schriftplatte 46 auf die Platine 10 lassen sich dann die aufgeschriebenen Daten in der vorgeschriebenen Weise ohne langes Überlegen einprogrammieren.

Im Tagesprogrammfeld 48 sind ferner noch ein Liniensymbol 64 für ein sich über 24 Stunden erstreckendes Festprogramm und dessen Parameter aufgedruckt. Die Wahl zwischen Festprogramm oder den wählbaren Tagesprogrammen kann über einen Drehschalter 66 im Bereich des Feldes 20 der Platine 10 getroffen werden, welcher noch weitere Funktionen hat, wie später noch beschrieben wird. Die Symbole und Aufdrucke für das Festprogramm können als Muster zum Ausfüllen der Schriftfeldplatte 46 dienen. Anstelle des Drehschalters 66 kann beispielsweise auch ein Schiebeschalter vorgesehen werden.

Die drei vorwählbaren Tagesprogramme können nun in besonders sinnfälliger Weise den einzelnen Tagen einer Woche zugeordnet werden, wodurch sich ein Wochenprogramm ergibt. Dies ist dadurch erreicht, dass neben dem Tagesprogrammfeld 48 ein Wochenprogrammfeld 68 auf der Platine 10 vorgesehen ist, in welches drei nach Lage mit den Linien 58 bis 62 auf der Schriftfeldplatte 48 korrespondierte Linien 70, 72, 74 aufgedruckt sind. Senkrecht zu den Linien 70 bis 74 sind die Führungsbahnen von sieben Schiebeschaltern 75 angeordnet, von denen ein jeder einen bestimmten, jeweils durch zwei Buchstaben gekennzeichneten Wochentag zugeordnet ist. Die Schaltung ist so ausgebildet, dass an einem bestimmten Wochentag gerade das Programm abläuft, welcher jener Linie 70, 72 oder 74 entspricht, auf welchem das Bedienungsglied des den betreffenden Wochentag zugeordneten Schiebeschalters 75 eingestellt ist. Durch einfaches Schieben der Bedienungsglieder der Schalter 75 auf die betreffende Linie 70, 72 oder 74 kann daher ein Heizprogramm für die ganze Woche zusammengestellt werden.

Das von der Klappe 16 nicht abgedeckte Feld 20 der Platine 10 enthält neben dem schon beschriebenen Drehschalter 66 einen zweiten Drehschalter 76, über welchen die Temperatursollwerte parallel entsprechend den aufgedruckten Temperaturdifferenzwerten nach oben oder unten verschoben werden können. Dadurch kann einem momentanen persönlichen Wärmeempfinden des Benutzers Rechnung getragen werden, ohne dass in das Programm selbst eingegriffen werden muss. Dem gleichen Zweck dienen weitere Schaltstellungen des Drehschalters 66, in welchem gemäss den vorgesehenen Aufdrucken ständig eine hohe oder eine niedrigere Temperatur oder gar nur eine Stütztemperatur einstellbar ist. Der Drehschalter 76 kann vorteilhaft als Drehpotentiometer ausgebildet sein.

Im Feld 20 ist ferner eine Spartaste 78 vorgesehen, bei deren Betätigung das Gerät sofort auf die nächst tiefere Temperatur des jeweils eingestellten Programms schaltet und diese Temperatur bis zum ersten Schaltpunkt des nächsten Tages beibehält. Tritt im weiteren Tagesablauf ein Schaltpunkt mit noch tieferer Temperatur auf, so wird auf diese Temperatur abgesenkt. Durch ein erneutes Drücken der Spartaste 78 wird die Funktion wieder aufgehoben. Eine Kontrollampe 80 neben der Taste 78 (Sparen) brennt, solange der Sparzyklus eingeschaltet ist. Eine weitere Kontrollampe 81 brennt, solange das Gerät Heizungsforderung ausgibt.

## Patentansprüche

1. Elektronisches Steuergerät für Heizungsanlagen, mit einer integrierten Digitaluhr und einem Display (12) für Tageszeitanzeige (26), welchem Temperaturtasten (32 bis 38) und ein Aktivierungsschalter (21) zugeordnet sind, nach dessen Betätigen die Display-Anzeige über die Temperaturtasten (32 bis 38) willkürlich veränderbar ist, ferner mit einem Rechner und mit einem Speicher für mindestens zwei Heizprogramme, welche über Aufruftasten (50), Temperaturtasten (40 bis 44) und die dem Display (12) zugeordneten Zeittasten (32 bis 38) vorwählbar sind, wobei das Display (12) die jeweils vorgewählte Zeit des aufgerufenen Heizprogramms anzeigt, und ferner mit einer beweglichen Klappe (16), welche die Aufruftasten (50) und die Zeittasten (32 bis 38) in einer Grundstellung abdeckt und in einer Programmierstellung freigibt, gekennzeichnet durch die Kombination folgender Merkmale:

a) das Display (12) enthält auch eine Temperaturanzeige (28), die von einem externen Wärmefühler gesteuert ist,

b) der Aktivierungsschalter (21) ist von der Klappe (16) betätigt und bringt die vom Wärmefühler gesteuerte Temperaturanzeige (28) des Displays (12) zum Erlöschen, sobald und solange sich die Klappe (16) in Programmierstellung befindet,

c) die Temperaturtasten (40 bis 42) zum Vorwählen der Heizungsprogramme sind der Temperaturanzeige (28) des Displays (12) zugeordnet,

d) nach Überführen der Klappe (16) in die Programmierstellung und Betätigen einer Aufruftaste (50) erscheinen auf dem Display (12) die bei einem vorangegangenen Programmiervorgang eingeschriebenen Daten (Zeit- und Temperatur) des aufgerufenen Heizprogramms und

e) nach Betätigen einer Aufruftaste (50) erscheinen über die Zeittasten (32 bis 38) und die Temperaturtasten (40 bis 44) in den Speicher eingeschriebene Zeit- und Temperaturwerte des vorgewählten Heizprogramms, bis eine andere Aufruftaste (50) betätigt oder die Klappe (16) in die Grundstellung zurückgeführt wird.

2. Steuergerät nach Anspruch 1, bei welchem die Aufruftasten (50) für die einzelnen Heizprogramme in einem Tagesprogrammfeld (48) in Reihen (52 bis 56) angeordnet sind, welche die einzelnen Heizprogramme symbolisieren, und mit Einstellmitteln (75) für ein Wochenprogramm, dadurch gekennzeichnet, dass die Einstellmittel (75) für das Wochenprogramm in einem neben dem Tagesprogrammfeld (48) liegenden Wochenprogrammfeld (68) in Reihen angeordnet bzw. in Bahnen verschiebbar sind, welche vorzugsweise im rechten Winkel zu den Reihen (52 bis 56) der Aufruftasten (50) im Tagesprogrammfeld (48) ausgerichtet sind und die einzelnen Wochentage symbolisieren.

3. Steuergerät nach Anspruch 2, dadurch gekennzeichnet, dass die Reihen (52 bis 56) im Tagesprogrammfeld (48) mit vorzugsweise unterschiedlich farbigen Linien (58 bis 62) versehen sind, welche sich im Wochenprogrammfeld (68) fortsetzen.

4. Steuergerät nach Anspruch 3, dadurch gekennzeichnet, dass die die Heizprogramme symbolisierenden Linien (58 bis 62) im Tagesprogrammfeld (48) auf einer abnehmbaren Schriftfeldplatte (46) angebracht sind.

5. Steuergerät nach einem der Ansprüche 2 bis 4, dadurch gekennzeichnet, dass die die Aufruftasten (50) für die Heizprogramme überdeckende Klappe (16) das Tagesprogrammfeld (48) und das Wochenprogrammfeld (68) samt den darin befindlichen Einstellmitteln (50, 75) überdeckt.

6. Steuergerät nach einem der vorhergehenden Ansprüche, dadurch gekennzeichnet, dass in den Speicher ein sich über 24 Stunden erstreckendes Festprogramm eingeschrieben ist, welches über einen Wahlschalter (66) alternativ zum willkürlich vorprogrammierbaren Tages- bzw. Wochenprogramm anwählbar ist.

## Claims

1. Electronic control device for heating systems, with an integrated digital clock and a display (12) for time-of-day indication (26), to which are assigned temperature buttons (32 to 38) and an activation switch (21), after the actuation of which the display indication can be changed arbitrarily via the temperature buttons (32 to 38), furthermore with a computer and with a memory for at least two heating programs, which can be preselected via call buttons (50), temperature buttons (40 to 44) and the time buttons (32 to 38) assigned to the display (12), the display (12) indicating the respective preselected time of the called heating program, and furthermore with a movable flap (16), which covers the call buttons (50) and the time buttons (32 to 38) in a basic position and exposes them in a programming position, characterised by the combination of the following features:

a) the display (12) also includes a temperature indication (28) which is controlled by an external heat sensor,

b) the activation switch (21) is actuated by the flap (16) and causes the temperature indication (28) of the display (12) controlled by the heat sensor to be cancelled as soon as and for as long as the flap (16) is in the programming position,

c) the temperature buttons (40 to 42) for preselecting the heating programs are assigned to the temperature indication (28) of the display (12),

d) after moving the flap (16) into the programming position and actuating a call button (50), the data (time and temperature) of the called heating program, which were entered in a preceding programming operation, appear on the display (12), and

e) after actuating a call button (50), time and temperature values of the preselected heating program, which were entered into the memory via the time buttons (32 to 38) and the temperature buttons (40 to 44), appear until another call button (50) is actuated or the flap (16) is moved back into the basic position.

2. Control device according to Claim 1, in which the call buttons (50) for the individual heating programs are arranged in a daily program array (48) in rows (52 to 56), which symbolize the individual heating programs, and with setting means (75) for a weekly program, characterized in that the setting means (75) for the weekly program are arranged in a weekly program array (68) alongside the daily program array (48), in rows or can be displaced in tracks which are preferably disposed at right angles to the rows (52 to 56) of the call buttons (50) in the daily program array (48) and symbolize the individual days of the week.

3. Control device according to Claim 2, characterized in that the rows (52 to 56) are provided in the daily program array (48) with lines (58 to 62), preferably of different colours, which continue in the weekly program array (68).

4. Control device according to Claim 3, characterized in that the lines (58 to 62) symbolizing the heating programs in the daily program array (48) are fitted on a detachable inscription plate (46).

5. Control device according to one of Claims 2 to 4, characterized in that the flap (16) covering the call buttons (50) for the heating programs covers the daily program array (48) and the weekly program array (68) together with the setting means (50, 75) located therein.

6. Control device according to one of the preceding claims, characterized in that a fixed program extending over 24 hours is entered in the memory and can be selected via a selector switch (66) as an alternative to the arbitrarily preprogramable daily or weekly program.

**Revendications**

1. Appareil électronique de commande pour des installations de chauffage avec une horloge numérique intégrée et un affichage (12) pour l'indication de l'heure (26) auxquels sont associées des touches de température (32 à 38) et un commutateur d'activation (21), selon l'actionnement duquel l'affichage est susceptible d'être modifié par l'intermédiaire des touches de température (32 à 38), en outre avec un calculateur et avec une mémoire pour au moins deux programmes de chauffage, qui sont susceptibles d'être présélectionnés par l'intermédiaire de touches d'appel (50), de touches de température (40 à 44), et des touches de temps (32 à 38) associées à l'affichage (12), l'affichage (12) indiquant le temps respectivement présélectionné du programme de chauffage appelé, et l'appareil comportant en outre un clapet mobile (16) qui, dans une position de base, recouvre les touches d'appel (50) et les touches de temps (32 à 38) et qui dans une position de programmation les libère, appareil de commande caractérisé par la combinaison des caractéristiques suivantes:

a) l'affichage (12) comporte également un affichage de température (28) commandé par un détecteur externe de température,

b) le commutateur d'activation (21) est actionné par le clapet (16) et provoque l'extinction de l'indication de température (28) de l'affichage (12) commandée par le détecteur de température, dès que et aussi longtemps que le clapet (16) se trouve dans la position de programmation,

c) les touches de température (40 à 42) pour la présélection des programmes de chauffage, sont associées à l'indication de température (28) de l'affichage (12).

d) après déplacement du clapet (16) dans la position de programmation, et l'actionnement d'une touche d'appel (50) il apparait sur l'affichage (12) les données inscrites lors d'un processus de programmation précédent (temps et température) du programme de chauffage ainsi appelé,

e) après actionnement d'une touche d'appel (50) il apparait par l'intermédiaire des touches de temps (32 à 38) et des touches de température (40 à 44) les valeurs de temps et de température du programme de chauffe ainsi présélectionné et qui sont inscrites dans la mémoire, jusqu'à ce qu'une autre touche d'appel (50) soit actionnée ou que le clapet (16) soit ramené dans sa position de base.

2. Appareil de commande selon la revendication 1, dans lequel les touches d'appel (50) pour les différents programmes de chauffage sont disposées sur un panneau de programme quotidien (48) selon des rangées (52 à 56), qui symbolisent les différents programmes de chauffage, et avec des moyens de mise en place (75) d'un programme hebdomadaire, appareil de commande caractérisé en ce que les moyens de mise en place (75) pour le programme hebdomadaire sont disposés sur un panneau de programme hebdomadaire (68) placé à côté du panneau de programme quotidien (48), en étant disposés en rangées ou bien en étant susceptibles d'être décalés sur des bandes qui sont de préférence orientées à angle droit par rapport aux rangées (52 à 56) des touches d'appel (50) sur le panneau de programme quotidien (48) et qui symbolisent les différents jours de la semaine.

3. Appareil de commande selon la revendication 2, caractérisé en ce que les rangées (52 à 56) sur le panneau de programme quotidien (48) sont de préférence munies de lignes de couleurs différentes (58 à 62) qui se poursuivent sur le panneau de programme hebdomadaire (68).

4. Appareil de commande selon la revendication 3, caractérisé en ce que les lignes (58 à 62) symbolisant les programmes de chauffage, sont rapportées sur le panneau de programme quotidien (48) sur une plaque d'inscription amovible.

5. Appareil de commande selon une des revendications 2 à 4, caractérisé en ce que le clapet (16) recouvrant les touches d'appel (50) pour le programme de chauffage, recouvre le panneau de programme quotidien (48) et le panneau de programme hebdomadaire (68) y compris les moyens de mise en place (50, 75) se trouvant sur ces panneaux.

6. Appareil de commande selon une des précédentes revendications, caractérisé en ce qu'un programme fixe s'étendant sur 24 heures est inscrit dans la mémoire, ce programme pouvant être sélectionné par l'intermédiaire d'un commutateur de sélection (68) soit pour un programme quotidien, soit pour un programme hebdomadaire préprogrammable à volonté.

# FIG.1

**TAG** — 24, 12
**ZEIT** — 26, 19
**TEMPERATUR** — 28, 81

TAG: DO
ZEIT: 22.34
TEMPERATUR: 20.5°

WOCHENPROGRAMM
FESTPROGRAMM
STÄNDIG 21°C
STÄNDIG 15°C
STÄNDIG 5°C — 66

GESAMT-
VERSCHIEBUNG
−1 +1
−2 +2 — 76
−3 +3

80
78 SPAREN

18
20
16
17  17

0 070 414

# FIG.3

**TAG** | **ZEIT** | **TEMPERATUR**

DO

`22.34` `20.5`

10

30 32 34 36 38 40 42 44 21

**WOCHENPROGRAMM**
**FESTPROGRAMM**
**STÄNDIG 21°C**
**STÄNDIG 15°C**
**STÄNDIG 5°C**

66

20

**GESAMT-VERSCHIEBUNG**

80

SPAREN

-1 +1
-2 +2
-3 +3

76

**FESTPROGRAMM**
64
6.30 UHR   23 UHR
22° C   17° C

78

**TAGESPROGRAMME**
52 58
1 UHR  2 UHR  3 UHR  4 UHR
°C  °C  °C  °C

54 60
1 UHR  2 UHR  3 UHR  4 UHR
°C  °C  °C  °C

56 62
1 UHR  2 UHR  3 UHR  4 UHR
°C  °C  °C  °C

**WOCHENPROGRAMM**

16

70

72

74

MO  DI  MI  DO  FR  SA  SO

17   48 (46)   50   68 (10)   75   17

## FIG.4

FESTPROGRAMM
630 UHR    23   UHR
22° C      17° C

TAGESPROGRAMME
UHR    UHR    UHR    UHR
° C    ° C    ° C    ° C
UHR    UHR    UHR    UHR
° C    ° C    ° C    ° C
UHR    UHR    UHR    UHR
° C    ° C    ° C    ° C

## FIG.2